(19) **Europäisches Patentamt**
**European Patent Office**
**Office européen des brevets**

(11) **EP 1 365 210 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(51) Int Cl.:
**G01C 5/04** *(2006.01)*

(21) Anmeldenummer: **03405328.0**

(22) Anmeldetag: **12.05.2003**

(54) **Anordnung zur relativen Höhenpositionierung einer Handwerkzeugmaschine**

Arrangement for the relative positioning in height of a hand tool

Agencement pour le positionnement relatif en hauteur d'un outil à main

(84) Benannte Vertragsstaaten:
**CH DE FR GB IT LI SE**

(30) Priorität: **21.05.2002 DE 10222343**

(43) Veröffentlichungstag der Anmeldung:
**26.11.2003 Patentblatt 2003/48**

(73) Patentinhaber: **HILTI Aktiengesellschaft**
**9494 Schaan (LI)**

(72) Erfinder:
• **Böni, Hans**
**9470 Buchs (CH)**

• **Würsch, Christoph**
**9470 Werdenberg (CH)**

(74) Vertreter: **Wildi, Roland et al**
**Hilti Aktiengesellschaft,**
**Corporate Intellectual Property**
**Feldkircherstrasse 100**
**Postfach 333**
**9494 Schaan (LI)**

(56) Entgegenhaltungen:
**EP-A2- 0 553 871   EP-A2- 0 856 378**

## Beschreibung

Die Erfindung bezeichnet eine Anordnung zur relativen Höhenpositionierung einer Handwerkzeugmaschine, wie eines Bohr- und Meisselhammers, Stichsäge, Schraubers etc.

Insbesondere im Bauhaupt- und Nebengewerbe sind vielfach Arbeiten mit einer Handwerkzeugmaschine auf einer vorgegebenen Höhe zu einem Bezugspunkt durchzuführen.

EP 0 856 378 offenbart beispielsweise ein Werkzeug mit Messeinrichtung in der Art eines Metermasses.

Das manuelle Anzeichnen einer relativen Höhenpositionierung mittels einer zur Nivellierung verwendeten einfachen Schlauchwaage und eines Messstabes ist üblich. Nach der EP0553871 weist für Mess- und Markierungsverfahren eine Schlauchwaage einen endseitigen Drucksensor und am gegenüberliegenden Ende eine Druckausgleichsöffnung zur Atmosphäre auf. Die notwendigen Arbeitsschritte des Positionierens und Markierens sind aufwändig und bedingen oftmals eine weitere Person.

Nach der EP0927871 dient eine Schlauchwaage mit Anzeigeeinheit zur relativen Höhenpositionierung eines, an einem Handhabungsautomaten befestigten, Werkzeugs, wobei die Schlauchwaage speziell als gegensinnig orientierte Doppelleitung mit einem Differenzdrucksensor ausgeführt ist. Nach der US3815423 ist eine Schlauchwaage mit Anzeigeeinheit zur relativen Höhenpositionierung der Schaufel eines Baggers integriert. Diese geräteintegrierten Schlauchwaagen bilden mit der mobilen Basiseinheit eine gerätefeste Referenzposition, die bei handgeführten Handwerkzeugmaschinen fehlt.

Nach der EP658742 wird die hydrostatische Druckdifferenz in der Schlauchwaage für die relative Höhenpositionierung einer mobilen Einheit relativ zu einer Basiseinheit verwendet, speziell zur Steuerung einer Tunnelvortriebsmaschine. Dazu weist ein flüssigkeitsgefüllter Schlauch mit zur Atmosphäre offenem Flüssigkeitsreservat einen Drucksensor auf. Die über eine Recheneinheit ermittelte Abweichung zu einem Sollwert wird über eine Anzeigeeinheit angezeigt und dient zur Fernsteuerung der Tunnelvortriebsmaschine von der Basiseinheit aus. Eine derartige Fernsteuerung ist bei handgeführten Handwerkzeugmaschinen nicht möglich.

Die Aufgabe der Erfindung besteht in der Vermeidung unnötiger Arbeitsschritte zur relativen Höhenpositionierung einer netzbetriebenen Handwerkzeugmaschine .

Die Aufgabe wird im Wesentlichen durch die Merkmale der unabhängigen Ansprüche gelöst. Vorteilhafte Weiterbildungen ergeben sich aus den Unteransprüchen.

Im Wesentlichen ist an der Handwerkzeugmaschine ein Schlauch mit einer diesen bis zu einer Arbeitsposition vollständig füllenden Flüssigkeit angeordnet, wobei ein Sensor zur Erfassung der hydrostatischen Druckdifferenz der Flüssigkeit vorhanden ist und ein Signalmittel zur Signalisierung einer relativen Höhenposition der Handwerkzeugmaschine zu einer Referenzposition vorhanden ist.

Durch die in der Handwerkzeugmaschine integrierte Schlauchwaage ist über die hydrostatische Druckdifferenz der Flüssigkeit eine Höhenpositionierung der Handwerkzeugmaschine gegenüber der zumindest temporär ortsfesten Referenzposition möglich, ohne dass es dazu weiterer Arbeitsschritte, wie des Positionierens oder Anzeichnens, bedarf.

Vorteilhaft verläuft der Schlauch längs eines Netzkabels der Handwerkzeugmaschine bis zu einem endseitigen Verbindungsmittel des Netzkabels zu einem Stromversorgungsnetzanschluss bspw. der Wandsteckdose oder Kabeltrommel, welche die Referenzposition (R) darstellt, wodurch innerhalb eines ununterbrochenen Nutzungsintervalls eine ortsfeste Referenzposition vorhanden ist.

Vorteilhaft ist zumindest an einem Ende des Schlauches ein den hydrostatischen Druck der Flüssigkeit erfassender Drucksensor angeordnet, welcher signalübertragend drahtgebunden oder drahtlos mit einer Auswerteelektronik zur Berechnung der Höhenpositionierung verbunden ist, wodurch Nivellierungen sowie positive oder negative Höhenpositionierungen möglich werden.

Vorteilhaft weist der Schlauch an beiden Enden je einen Drucksensor auf, welche mit einer Auswerteelektronik zur Bildung eines Differenzdrucks verbunden sind, wodurch Höhenpositionierungen mit einem bezüglich des Atmosphärendrucks betragsmässig grösseren hydrostatischen Differenzdruck möglich sind, bspw. mit Wasser als Flüssigkeit über ca. 7 m hinausgehend.

Alternativ vorteilhaft weist der Schlauch ein Druckausgleichsmittel zur Atmosphäre, wie eine Druckausgleichsmembran, auf, wodurch temperaturbedingte oder atmosphärendruckbedingte Flüssigkeitsvolumenänderungen im Schlauch flüssigkeitsdicht isobar ausgleichbar sind.

Vorteilhaft ist der Schlauch beidseitig mit je einem Druckausgleichsmittel zur Atmosphäre abgeschlossen und zwischen diesen beiden ein als Differenzdrucksensor ausgebildeter Drucksensor angeordnet, bspw. an einer beliebigen Zwischenposition im Elektrohandwerkzeuggerät, welcher signalübertragend drahtgebunden oder drahtlos mit einer Auswerteelektronik zur Berechnung der Höhenpositionierung verbunden ist, wodurch die Abhängigkeit vom Atmosphärendruck im Wesentlichen entfällt.

Vorteilhaft ist eine Eingabeeinheit und eine Speichereinheit mit der Auswerteelektronik verbunden, wodurch ein Sollwert numerisch in die Speichereinheit eingebbar oder weiter vorteilhaft ein einmalig positionierter Istwert als Sollwert in die Speichereinheit übernehmbar ist, bspw. durch Druck auf eine Übernahmetaste, welche die aktuelle Höhenposition für nachfolgende, weiteren Höhenpositionierungen übernimmt.

Vorteilhaft gibt das Ausgabemittel die Abweichung der Höhenpositionierungen als Differenz des Istwertes vom Sollwert an, wobei die Differenz entweder numerisch bspw. mit einem Display oder graphisch bspw. als rot/grüne LED-Balken angezeigt oder akustisch bspw. mit einem im Nulldurchgang verschwindenden Ton signalisiert wird, wodurch der Nutzer in Reaktion auf diese Differenz die Handwerkzeugmaschine intuitiv auf der vorgewählten Höhenpositionierung ansetzt.

Vorteilhaft sind der Schlauch sowie optional die Signalleitungen des im Verbindungsmittel integrierten Drucksensors innerhalb des Querschnitts des Netzkabels angeordnet.

Die Erfindung wird bezüglich eines vorteilhaften Ausführungsbeispiels näher erläutert mit einer Darstellung zur Höhenpositionierung einer netzbetriebenen Handwerkzeugmaschine .

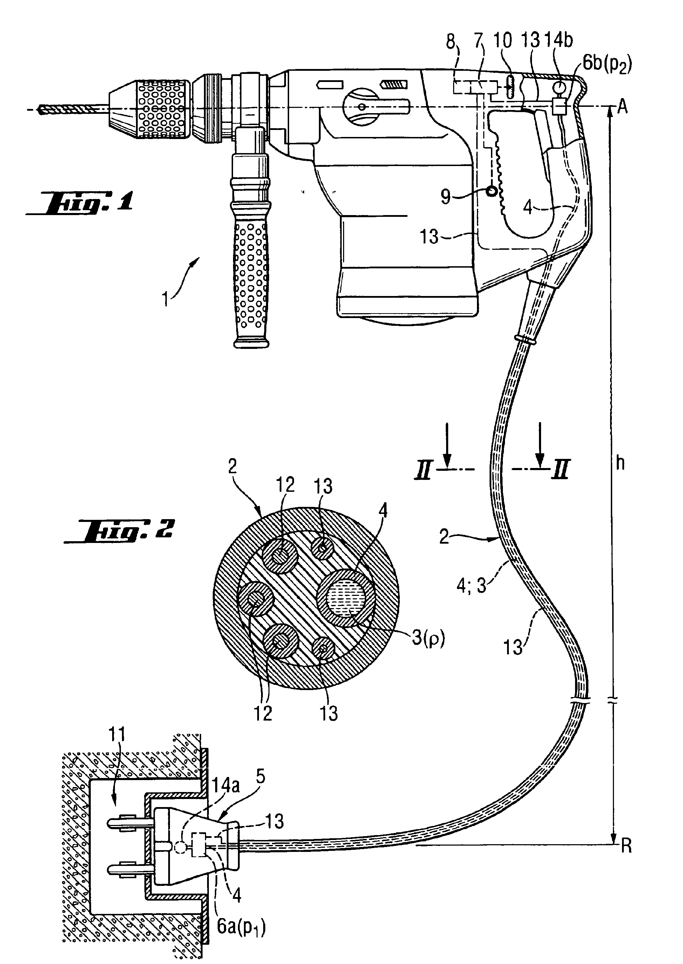

Nach den Darstellungen gemäss Fig. 1 und Querschnittdarstellung Fig. 2 verläuft bei einer als Bohrhammer ausgebildeten Handwerkzeugmaschine 1 entlang eines 5 m langen Netzkabels 2 ein vollständig mit einer Flüssigkeit 3 in Form von Wasser gefüllter Schlauch 4, an dessen, ein Verbindungsmittel 5 in Form eines Netzsteckers 11 aufweisendem, Ende ein Drucksensor 6a angeordnet ist. Über innerhalb des Querschnitts des Netzkabels 2 mit drei Stromleitungen 12 gemeinsam mit dem Schlauch 4 verlaufenden zwei Signalleitungen 13 wird der im Netzstecker integrierte Drucksensor 6a ausgelesen. Das andere Ende des vollständig mit Flüssigkeit 3 gefüllten Schlauches 4 wird im Handgriff der Handwerkzeugmaschine 1 bis zur Arbeitsposition A geführt, an welcher ein zweiter Drucksensor 6b angeordnet ist. Die Drucksensoren 6a, 6b messen jeweils auf ihrer Position den hydrostatischen Druck $p_1$ und $p_2$ der Flüssigkeit 3 im Schlauch 4 gegen die Atmosphäre, wobei die Position des Netzsteckers als Referenzposition R dient. Vorteilhaft ist der Schlauch beidseitig mit je einem Druckausgleichsmittel 14a, 14b zur Atmosphäre versehen. Mit einer Auswerteelektronik 7 wird mit der Dichte ρ der Flüssigkeit 3 im Schlauch 4 und aus den hydrostatischen Teildrücken $p_1$ und $p_2$ die der Höhe der Flüssigkeitssäule entsprechende Höhendifferenz $h$ relativ zwischen den Positionen der Drucksensoren 6a, 6b berechnet:

$$h = \frac{p_1 - p_2}{\rho \cdot g}$$

Die aktuelle Höhenposition, welche sich summarisch aus der Referenzposition und der Höhendifferenz ergibt, der Handwerkzeugmaschine 1 ist über eine mit der Auswerteelektronik 7 mit einer Speichereinheit 8 verbundenen Übernahmetaste 9 vom Nutzer als Sollwert speicherbar und die Differenz des Istwertes zum Sollwert über ein Ausgabemittel 10 graphisch anzeigbar.

Bei der Höhenpositionierung einer netzbetriebenen als Bohrhammer ausgebildeten Handwerkzeugmaschine fährt der Nutzer mit der Spitze der Bohrers an die entsprechende Stelle und drückt auf die Übernahmetaste, wobei der Bohrhammer in Ansetzposition gehalten werden sollte. Nun kann sich der Nutzer von diesem Punkt entfernen und an einer beliebigen anderen Stelle, innerhalb der Reichweite seines Netzkabels, auf dieser Höhe weiterarbeiten. Dazu setzt er den Bohrhammer an die Wand und verschiebt diesen in vertikaler Richtung solange, bis die auf einem Display 10 numerisch angezeigte Höhendifferenz verschwindet.

**Patentansprüche**

1. Handwerkzeugmaschine , **dadurch gekennzeichnet, dass** an der Handwerkzeugmaschine ein Schlauch (4) mit einer diesen bis zu einer Arbeitsposition (A) vollständig füllenden Flüssigkeit (3) angeordnet ist, dass ein Sensor zur Erfassung der hydrostatischen Druckdifferenz der Flüssigkeit (3) vorhanden ist und dass ein Signalmittel (10) zur Signalisierung einer relativen Höhenposition der Handwerkzeugmaschine zu einer Referenzposition (R) vorhanden ist.

2. Handwerkzeugmaschine nach Anspruch 1, **dadurch gekennzeichnet, dass** der Schlauch (4) längs eines Netzkabels (2) der Handwerkzeugmaschine bis zu einem endseitigen Verbindungsmittel (5) des Netzkabels (2) zu einem Stromversorgungsnetzanschluss (11) verläuft, der die Referenzposition (R) darstellt.

3. Handwerkzeugmaschine nach Anspruch 1 oder 2, **dadurch gekennzeichnet, dass** zumindest an einem Ende des Schlauches (4) ein den hydrostatischen Druck (p1, p2) der Flüssigkeit (3) erfassender Drucksensor (6a, 6b) angeordnet ist, welcher signalübertragend mit einer Auswerteelektronik (7) zur Berechnung der Höhenposition verbunden ist.

4. Handwerkzeugmaschine nach einem der Ansprüche 1 bis 3, **dadurch gekennzeichnet, dass** der Schlauch (4) an beiden Enden je einen Drucksensor (6a, 6b) aufweist, welche mit einer Auswerteelektronik (7) zur Berechnung der Höhenposition verbunden sind.

5. Handwerkzeugmaschine nach Anspruch 1 oder 2, **dadurch gekennzeichnet, dass** der Schlauch (4) ein Druckausgleichsmittel (14a, 14b) zur Atmosphäre aufweist.

6. Handwerkzeugmaschine nach Anspruch 5, **dadurch gekennzeichnet, dass** der Schlauch (4) beidseitig mit je einem Druckausgleichsmittel (14a, 14b) zur Atmosphäre abgeschlossen ist und zwischen diesen beiden ein als Differenzdrucksensor ausgebildeter Drucksensor (6b) angeordnet ist, welcher signalübertragend mit einer Auswerteelektronik (7) zur Berechnung der Höhenposition verbunden ist.

7. Handwerkzeugmaschine nach einem der vorherigen Ansprüche, **dadurch gekennzeichnet, dass** eine Eingabeeinheit (9) und eine Speichereinheit (8) mit der Auswerteelektronik (7) verbunden ist.

8. Handwerkzeugmaschine nach einem der vorherigen Ansprüche, **dadurch gekennzeichnet, dass** das Ausgabemittel (10) die Abweichung der Höhenposition als Differenz eines Istwertes von einem Sollwert signalisiert.

9. Handwerkzeugmaschine nach einem der vorherigen Ansprüche, **dadurch gekennzeichnet, dass** der Schlauch (4) sowie optional die Signalleitungen (13) des im Verbindungsmittel (5) integrierten Drucksensors (6a) innerhalb des Querschnitts des Netzkabels (2) angeordnet sind.

**Claims**

1. Hand tool, **characterised in that** a hose (4) is arranged on the hand tool with a liquid (3) completely filling it up as far as a working position (A), there is a sensor to detect the hydrostatic pressure difference of the liquid (3) and a means of signalling (10) to signal a relative height position of the hand tool to a reference position (R).

2. Hand tool according to claim 1, **characterised in that** the hose (4) runs lengthways along a mains cable (2) of the hand tool as far as a means of connection (5) at the end for connecting the mains cable (2) to a mains power supply (11), which represents the reference point (R).

3. Hand tool according to claim 1 or 2, **characterised in that** at least at one end of the hose (4) a pressure sensor (6a, 6b) detecting the hydrostatic pressure (p1, p2) of the liquid (3) is arranged, which is connected to evaluation electronics (7) in a way that conveys the signals for calculating the height position.

4. Hand tool according to one of claim 1 to 3, **characterised in that** the hose (4) has a pressure sensor (6a, 6b) at both ends, which are connected to evaluation electronics (7) for calculating the height position.

5. Hand tool according to claim 1 or 2, **characterised in that** the hose (4) has a means of pressure balancing (14a, 14b) to the atmosphere.

6. Hand tool according to claim 5, **characterised in that** the hose (4) is closed to the atmosphere on both sides with a means of pressure balancing (14a, 14b) and between both these a pressure sensor (6b) made as a differential pressure sensor is arranged, which is connected to evaluation electronics (7) in a way that conveys the signals for calculating the height position.

7. Hand tool according to one of the previous claims, **characterised in that** an input unit (9) and a storage unit (8) are connected to evaluation electronics (7).

8. Hand tool according to one of the previous claims, **characterised in that** the means of output (10) signals the deviation in height position as the difference between an actual value and a theoretical value.

9. Hand tool according to one of the previous claims, **characterised in that** the hose (4) and as an option the signal lines (13) of the pressure sensor (6a) integrated into the means of connection (5) are arranged within the cross section of the mains cable (2).

**Revendications**

1. Machine-outil manuelle, **caractérisée en ce qu'**un tuyau flexible (4) entièrement rempli d'un liquide (3) jusqu'à une position de travail (A) est agencé sur la machine-outil manuelle, **en ce qu'**un capteur est présent pour détecter la différence de pression hydrostatique du liquide (3), et **en ce que** des moyens de signalisation (10) sont présents pour signaler une position de hauteur relative de la machine-outil manuelle par rapport à une position de référence (R).

2. Machine-outil manuelle selon la revendication 1, **caractérisée en ce que** le tuyau souple (4) s'étend le long d'un câble de réseau (2) de la machine-outil manuelle jusqu'à des moyens de connexion d'extrémité (5) du câble de réseau (2) jusqu'à une prise de réseau d'alimentation électrique (11) qui constitue la position de référence (R).

3. Machine-outil manuelle selon la revendication 1 ou 2, **caractérisée en ce qu'**un capteur de pression (6a, 6b) détectant la pression hydrostatique (p1, p2) du liquide (3) est agencé au moins à une extrémité du tuyau flexible (4), lequel le capteur de pression est relié à une électronique d'évaluation (7) en transmettant des signaux afin de calculer la position en hauteur.

4. Machine-outil manuelle selon l'une quelconque des revendications 1 à 3, **caractérisée en ce que** le tuyau flexible (4) comporte un capteur de pression (6a, 6b) à chaque extrémité, lequel capteur est relié à une électronique d'évaluation (7) afin de calculer la position en hauteur.

5. Machine-outil manuelle selon la revendication 1 ou 2, **caractérisée en ce que** le tuyau flexible (4) comporte des moyens d'équilibrage de pression (14a, 14b) avec l'atmosphère.

6. Machine-outil manuelle selon la revendication 5, **caractérisée en ce que** le tuyau flexible (4) est terminé des deux côtés par des moyens d'équilibrage de pression (14a, 14b) avec l'atmosphère, et un capteur de pression (6b) configuré comme un capteur de pression différentielle est agencé entre ceux-ci, lequel capteur est relié à une électronique d'évaluation (7) en transmettant des signaux afin de calculer la position en hauteur.

7. Machine-outil manuelle selon l'une quelconque des revendications précédentes, **caractérisée en ce qu'**une unité d'entrée (9) et une unité de mémorisation (8) sont reliées à l'électronique d'évaluation (7).

8. Machine-outil manuelle selon l'une quelconque des revendications précédentes, **caractérisée en ce que** les moyens de sortie (10) indiquent l'écart de position en hauteur sous la forme d'une différence entre une valeur réelle et une valeur de consigne.

9. Machine-outil manuelle selon l'une quelconque des revendications précédentes, **caractérisée en ce que** le tuyau flexible (4), ainsi que facultativement les lignes de signaux (13) du capteur de pression (6a) intégré dans les moyens de connexion (5), sont agencés à l'intérieur de la section transversale du câble de réseau (2).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0856378 A
- EP 0553871 A
- EP 0927871 A
- US 3815423 A
- EP 658742 A